Europäisches Patentamt

European Patent Office

Office européen des brevets

(19)

(11) Numéro de publication : **0 264 366**
**B1**

(12) **FASCICULE DE BREVET EUROPÉEN**

(45) Date de publication du fascicule du brevet :
07.03.90

(21) Numéro de dépôt : 86902440.6

(22) Date de dépôt : 30.04.86

(86) Numéro de dépôt international :
PCT/FR 86/00151

(87) Numéro de publication internationale :
WO/8706660 (05.11.87 Gazette 87/24)

(51) Int. Cl.⁵ : **F 16 C 13/00**, B 21 B 13/14

(54) CYLINDRE DE LAMINOIR A ENVELOPPE DEFORMABLE.

(43) Date de publication de la demande :
27.04.88 Bulletin 88/17

(45) Mention de la délivrance du brevet :
07.03.90 Bulletin 90/10

(84) Etats contractants désignés :
AT BE CH DE GB IT LI LU NL SE

(56) Documents cités :
DE--A-- 2 332 861
DE--A-- 3 022 491
DE--A-- 3 119 387
DE--B-- 1 193 792
FR--A-- 1 412 267
FR--A-- 1 536 535
FR--A-- 2 373 639
GB--A-- 2 011 555
GB--A-- 2 060 822
GB--A-- 2 092 928

(73) Titulaire : CLECIM
107 boulevard de la Mission Marchand
F-92400 Courbevoie (FR)

(72) Inventeur : MOREL, Michel
4bis, avenue André Chenier
F-77500 Chelles (FR)
Inventeur : VALENCE, Marc
14, avenue Dubonnet
F-92400 Courbevoie (FR)

(74) Mandataire : Le Brusque, Maurice et al
Cabinet Harlé et Phélip 21, rue de la Rochefoucauld
F-75009 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un cylindre de laminoir à enveloppe déformable du type comportant un support fixe, une enveloppe tubulaire et un ensemble d'éléments de maintien de l'enveloppe dans la direction radiale.

On a déjà proposé d'utiliser de tels cylindres à enveloppe déformable comme cylindres d'appui dans des cages de laminoir, par exemple du type quarto, pour le laminage de produits plats. Ces cylindres permettent par exemple d'effectuer des corrections d'épaisseur et de planéité sur le produit plat en cours de laminage.

Les éléments de maintien de l'enveloppe tubulaire dans la direction radiale par rapport au support fixe sont généralement constitués par des vérins dont la chambre est usinée ou rapportée sur le support fixe et dont la tige comporte, à son extrémité dirigée vers la surface intérieure de l'enveloppe, un patin de glissement réservant une chambre permettant d'établir un film de fluide entre le patin et l'enveloppe tubulaire. De cette façon, l'enveloppe peut glisser pratiquement sans frottement pendant sa rotation sur l'extrémité du patin (DE-A-3022491).

Dans les cylindres à enveloppe déformable connus, un même fluide sous pression alimente la chambre du vérin et la chambre du patin pour constituer le film fluide de glissement. Ces deux chambres sont donc en communication par un canal prévu dans la tige du vérin.

La pression d'alimentation de la chambre du vérin doit être réglée et modulée en fonction des paramètres de réglage de la cage du laminoir. Il faut donc prévoir un circuit hydraulique d'alimentation comportant des éléments hydrauliques ou électro-hydrauliques de réglage. De tels éléments sont limités, dans leur condition d'utilisation, à une pression de 300 bars au maximum.

Dans le cas d'un laminoir utilisé pour le traitement de produits nécessitant des efforts de laminage élevés, cette pression d'alimentation des vérins peut s'avérer insuffisante, si bien que dans certaines phases du laminage, les tiges des vérins peuvent être amenées en butée dans leur chambre, contre le support fixe, ce qui n'est pas trop grave puisqu'on perd simplement, de façon momentanée, la possibilité de réglage de la cage, mais surtout le film de fluide entre le patin et l'enveloppe tubulaire peut être totalement laminé, ce qui entraîne un frottement générateur de destructions entre l'enveloppe tubulaire et le patin du vérin ou même le support fixe.

De façon plus générale, dans le cas du laminage d'un produit plat quelconque, il peut se produire des surpressions momentanées, notamment au moment de l'engagement de la bande dans la cage de laminoir. Si la pression du film fluide entre les patins des vérins de maintien de l'enveloppe et cette enveloppe tubulaire est insuffisante, il peut se produire une mise en contact et des frottements générateurs d'usure ou de destruction de l'enveloppe, des patins et du support fixe.

Le but de l'invention est donc de proposer un cylindre de laminoir tel que décrit dans le préambule de la revendication 1 qui ne présente pas les inconvénients des cylindres connus de l'art antérieur, lors de l'apparition de surpressions dues à un effort de laminage excessif.

Un laminoir répondant à ce but ressort des caractéristiques décrites dans la seconde partie de la revendication 1.

Afin de bien faire comprendre l'invention, on va maintenant décrire, à titre d'exemples non limitatifs, en se référant aux figures jointes en annexe, plusieurs modes de réalisation d'un cylindre de laminoir suivant l'invention utilisable comme rouleau d'appui dans une cage de laminoir pour produits plats.

La figure 1 est une vue en coupe transversale d'un cylindre suivant l'invention et suivant un premier mode de réalisation.

La figure 2 est une vue suivant F de la figure 1.

La figure 3 est une vue de dessus des éléments de maintien de l'enveloppe du cylindre représenté sur les figures 1 et 2.

La figure 4 est une vue en coupe transversale d'un cylindre suivant l'invention et selon un second mode de réalisation.

La figure 5 est une vue de dessus des éléments de maintien de l'enveloppe du cylindre représenté à la figure 5.

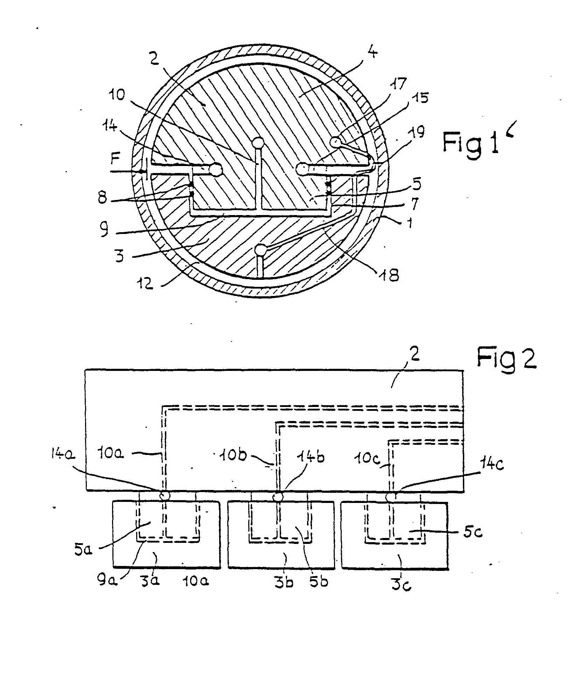

Sur la figure 1, on voit un cylindre comportant une enveloppe tubulaire 1, un support fixe 2 et un ensemble d'éléments de maintien radial tel que 3. Trois éléments de maintien 3a, 3b et 3c, disposés les uns à la suite des autres dans la direction longitudinale du cylindre, sont visibles sur la figure 2 qui représente une vue de côté du support fixe et des éléments de maintien.

Le support fixe 2 est monté à ses extrémités dans le bâti de la cage et comporte une partie supérieure cylindrique 4 dont le diamètre est inférieur au diamètre intérieur de l'enveloppe tubulaire 1. La partie inférieure 5 du support fixe 2 est usinée pour constituer trois pistons cylindriques 5a, 5b, 5c à axes verticaux représentés sur la figure 2.

Les éléments de maintien 3a, 3b et 3c sont constitués par des portions de cylindre à l'intérieur desquelles sont usinés des logements de forme cylindrique et d'un diamètre légèrement supérieur au diamètre des pistons 5a, 5b et 5c.

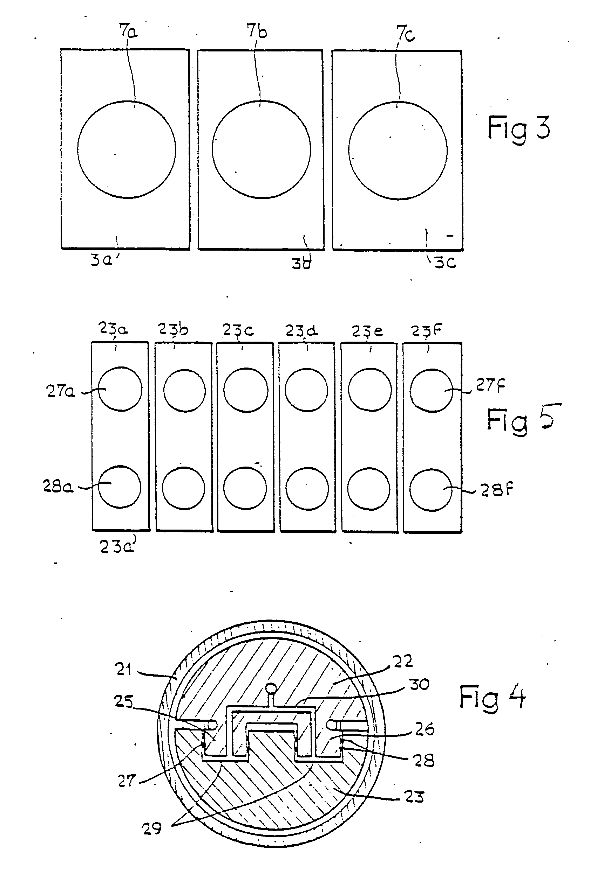

Ces logements 7a, 7b et 7c visibles sur la figure 3 constituent les cylindres des vérins hydrauliques de maintien dont les parties 5a, 5b et 5c du support fixe 2 sont les pistons. Un jeu de joints 8 permet de réaliser un montage étanche des pistons 5 dans les cylindres 7.

Les éléments de maintien 3 ont un diamètre extérieur légèrement inférieur au diamètre extérieur de la partie cylindrique supérieure 4 du support fixe 2. La forme des éléments 3 est déterminée de façon à faciliter la création du film d'huile. Entre l'extrémité du piston 5 et le fond du cylindre 7 est ménagée une chambre 9 qui est alimentée en huile hydraulique sous haute pression par une canalisation 10.

L'ensemble du support 2 et des éléments de maintien 3 assemblés par engagement des pistons 5 dans les cylindres 7 a une forme grossièrement cylindrique, l'enveloppe tubulaire 1 étant montée autour de cet ensemble et un espace annulaire d'une certaine épaisseur étant maintenu entre la surface intérieure de l'enveloppe tubulaire 1 et la surface extérieure de l'ensemble du support fixe 2 et des pièces de maintien 3.

A sa partie inférieure, cet espace constitue un secteur angulaire 12 d'une amplitude un peu inférieure à 180°. Aux extrémités de ce secteur angulaire 12, compris entre l'enveloppe tubulaire 1 et les pièces de maintien 3, débouchent des canalisations 14 et 15 usinées dans le support fixe 2. Les canalisations 14 et 15 débouchent juste au-dessus des extrémités des pièces de maintien 3 en forme de secteurs cylindriques.

Les canalisations 14 sont alimentées en huile à basse pression qui s'écoule dans le secteur angulaire 12 avant d'être évacuée par les canalisations 15 correspondantes.

Dans le laminoir en fonctionnement, l'enveloppe tubulaire 1 est mise en rotation à grande vitesse autour du support fixe 2 et des éléments de maintien 3. Grâce à la circulation d'huile hydraulique dans le secteur annulaire 12, entre la canalisation d'arrivée 14 et la canalisation d'évacuation 15, un film de fluide est interposé entre la surface intérieure de l'enveloppe tubulaire 1 et la surface extérieure des éléments de maintien 3.

Le cylindre de laminoir représenté à la figure 1 qui peut par exemple constituer un rouleau supérieur d'appui dans une cage quarto de laminoir reçoit des efforts de laminage dirigés de bas en haut qui sont transmis aux éléments de maintien 3 par l'intermédiaire du film fluide hydrodynamique circulant dans l'espace annulaire 12.

La largeur de cet espace 12 a tendance à diminuer sous l'effet des efforts de laminage mais la pression du fluide en circulation augmente alors pour atteindre des niveaux qui peuvent être de l'ordre de plusieurs milliers de bars dans le cas d'un laminoir quarto.

Les éléments de maintien 3 constituent des paliers ou patins hydro-dynamiques susceptibles de transmettre des efforts de laminage extrêmement élevés aux vérins constitués par les éléments 5 et 7.

Dans le cas d'un effort de laminage qui devient momentanément très élevé, on évite, grâce à la présence du patin hydrodynamique, toute possibilité de contact entre l'enveloppe 1 et l'élément de maintien 3. En revanche, la pression dans la chambre 9 du vérin est limitée par le fait que le fluide haute pression amené par la canalisation 10 provient d'un circuit hydraulique de commande dont la pression d'utilisation peut aller jusqu'à 300 bars et même un peu au-delà si l'on ne recherche pas une régulation très précise de la pression. Cependant dans le cas d'une surpression momentanée importante, le piston 5 peut venir en butée sur le fond du cylindre 7. Ceci n'a pas d'incidence sur le fonctionnement du laminoir, mis à part le fait que la correction d'épaisseur ou de planéité n'est plus possible momentanément.

Aucune destruction par frottement entre l'enveloppe tubulaire 1 et les éléments 3 n'est cependant à craindre grâce à la présence du palier hydro-dynamique.

Pour éviter toute possibilité de mise en contact accidentelle de l'enveloppe tubulaire 1 et des éléments de maintien 3, en cas de défaut d'alimentation en fluide basse pression du palier hydrodynamique par la canalisation 14, ou en cas d'arrêt de la rotation de l'enveloppe tubulaire 1, on a prévu une alimentation de secours à haute pression de l'espace 12 en forme de secteur annulaire, comportant une canalisation 17 dans le support fixe, une canalisation 18 dans l'élément de maintien radial 3 et une conduite flexible 19 dans l'espace ménagé entre l'enveloppe tubulaire 1 d'une part et le support fixe 2 et les éléments de maintien 3 d'autre part.

Sur les figures 4 et 5, on a représenté respectivement un cylindre de laminoir suivant un autre mode de réalisation et les éléments de maintien et d'appui de ce cylindre.

L'enveloppe tubulaire 21 du cylindre est montée comme précédemment avec un certain jeu radial autour de l'ensemble constitué par le support fixe 22 et les éléments d'appui 23 en forme de secteurs cylindriques.

A la différence du dispositif représenté sur les figures 1 et 2 dont le support 2 ne comportait qu'un seul piston 5 en face de chacun des éléments de maintien 3, le dispositif représenté aux figures 4 et 5 comporte un support fixe 22 qui est usiné pour constituer deux pistons 25 et 26 au niveau de chacun des éléments de maintien 23.

On peut ainsi utiliser des éléments de maintien plus nombreux dont la section par un plan horizontal, comme visible sur la figure 5, a la forme d'un rectangle allongé tout en gardant une surface suffisante pour la section totale des cylindres 27 et 28 correspondant aux pistons 25 et 26.

L'ensemble d'éléments de maintien et d'appui représenté à la figure 5 comporte six éléments à section rectangulaire allongée 23a à 23f comportant chacun deux cylindres 27a et 28a à 27f et 28f.

La section totale des deux cylindres 27 et 28 est en effet plus importante que la section totale du cylindre unique de diamètre maximum qu'on peut loger dans la section d'un élément d'appui et de maintien 23 tel que représenté à la figure 5.

De tels éléments de maintien et d'appui peuvent donc supporter des efforts de laminage exceptionnels plus importants. Un tel dispositif comportant un plus grand nombre d'éléments de maintien permet également un meilleur réglage de la forme de l'enveloppe déformable 21 du cylindre et donc un meilleur contrôle de la planéité et de l'épaisseur du produit plat en cours de laminage.

Les principaux avantages du cylindre de laminoir suivant l'invention sont donc de pouvoir transmettre des efforts plus importants par l'intermédiaire de l'enveloppe déformable, du film liquide et des éléments de maintien et d'éviter ainsi une mise en contact entre l'enveloppe déformable et les éléments d'appui ou le support fixe. Le cylindre de laminoir suivant l'invention permet également d'augmenter la force exercée par les vérins associés à chacun des dispositifs de maintien pour un cylindre utilisant un même nombre de dispositifs d'appui situés les uns à la suite des autres dans la direction longitudinale du cylindre.

L'invention ne se limite pas aux modes de réalisation qui ont été décrits.

C'est ainsi qu'on peut imaginer d'autres modes de réalisation du support fixe et des dispositifs de maintien et d'appui. En particulier, au lieu de réaliser les pistons dans le support fixe et les cylindres dans les éléments de maintien, on peut prévoir les cylindres dans le support fixe et les pistons dans les éléments de maintien.

On peut également prévoir des éléments de maintien ayant une section de forme carrée ou rectangulaire quelconque et comportant un nombre de cylindres ou pistons quelconque disposés en face d'éléments correspondants dans le support fixe.

Enfin, le cylindre de laminoir suivant l'invention s'applique non seulement dans le cas des cylindres d'appui d'un laminoir quarto mais encore dans le cas des cylindres d'appui d'un laminoir quinto ou sexto. Les éléments de maintien et d'appui peuvent être utilisés non seulement pour le réglage de planéité et d'épaisseur d'un produit plat mais encore pour d'autres fonctions telles que le serrage de la cage, par exemple pour le contrôle de tension d'une bande de tôle.

## Revendications

1. Cylindre de laminoir à enveloppe déformable constitué par un support fixe (2), une enveloppe tubulaire (1) entourant le support (2) avec un certain jeu radial, et une pluralité d'éléments (3) de maintien de l'enveloppe tubulaire (1) dans la direction radiale, répartis l'un à côté de l'autre sur la longueur du support (2) et associés chacun à au moins un vérin hydraulique de maintien et de poussée de l'élément de maintien (3) comprenant deux éléments (5, 7) montés coulissants l'un dans l'autre suivant la direction radiale, respectivement un élément fixe (5) ménagé dans la partie inférieure du support fixe (2) tournée vers l'élément de maintien (3) et un élément mobile (7) ménagé dans l'élément de maintien (3), lesdits éléments fixe (5) et mobile (7) limitant une chambre (9) du vérin reliée à un circuit (10) d'alimentation en fluide à haute pression, chaque élément de maintien (3) constituant un patin en forme de portion de cylindre ayant une face extérieure de diamètre légèrement inférieur au diamètre de la face interne de l'enveloppe tubulaire (1) de façon à réserver une chambre en forme de secteur annulaire (12) alimentée en fluide lubrifiant pour la formation d'un film fluide de glissement entre le patin (3) et l'enveloppe (1), caractérisé par le fait que chaque patin de maintien (2, 23) s'étend sur un secteur angulaire (12) d'amplitude un peu inférieure à 180° et est associé à un circuit de mise en circulation de fluide d'une extrémité à l'autre de la chambre annulaire (12) du patin (3) comprenant au moins une canalisation (14) d'alimentation en fluide basse pression et une canalisation (15) de récupération du fluide débouchant respectivement aux deux extrémités, respectivement amont et aval, de la chambre annulaire (12) dudit patin (3) de façon que chaque patin (3) constitue un palier hydrodynamique de maintien de l'enveloppe et que le circuit (10) d'alimentation en fluide haute pression du vérin de poussée (5, 7) de chaque patin de maintien (3) est totalement indépendant du circuit (14, 15) de mise en circulation du fluide dans la chambre annulaire (12).

2. Cylindre de laminoir selon la revendication 1, caractérisé par le fait que la partie inférieure du support (2) est usinée pour constituer au moins un piston (5) formant l'élément fixe du vérin hydraulique et s'engageant dans un logement cylindrique (7) usiné dans le patin de maintien (3) et formant le cylindre mobile du vérin.

3. Cylindre de laminoir selon la revendication 2, caractérisé par le fait que dans chacun des éléments de maintien (23) sont usinés au moins deux logements cylindriques (27, 28) ayant des dimensions et positions correspondant à la dimension et à la position d'au moins deux pistons cylindriques (25, 26) prévus sur le support fixe (22) en face de chacun·des éléments de maintien (23).

4. Cylindre de laminoir selon la revendication 1, caractérisé par le fait que l'élément fixe de chaque vérin hydraulique est constitué par un logement cylindrique usiné dans la partie inférieure du support fixe (2) et formant le cylindre du vérin dans lequel s'engage un piston cylindrique usiné sur le patin de maintien (3) et constituant l'élément mobile du vérin.

5. Cylindre de laminoir selon l'une des revendications précédentes, caractérisé par le fait que la forme de chaque élément de maintien (3) est déterminée de façon à faciliter la création du film d'huile.

6. Cylindre de laminoir suivant l'une quelconque des revendications 1 à 5, caractérisé par le fait qu'il comporte des conduits d'arrivée de fluide (17, 18, 19) à haute pression dans la zone (12) en forme de secteur annulaire pour éviter toute possibilité de mise en contact accidentelle de l'enveloppe tubulaire (1, 21) et des éléments de maintien (3, 23).

## Claims

1. Milling roll with deformable envelope consisting of a fixed support (2), a tubular envelope (1) surrounding the support (2) with some radial play, and a plurality of elements (3) for holding the tubular envelope (1) in the radial direction, which are distributed next to one another over the length of the support (2) and which are each associated with at least one hydraulic jack for holding and pushing the holding element (3), comprising two elements (5, 7) mounted slideably one in the other in the radial direction, namely a fixed element (5) formed in that lower part of the fixed support (2) facing the holding element (3) and a movable element (7) formed in the holding element (3), the said fixed element (5) and the said movable element (7) limiting a jack chamber (9) connected to a high-pressure fluid feed circuit (10), each holding element (3) constituting a bolster in the form of a portion of a cylinder, having an outer face of a diameter slightly smaller than the diameter of the inner face of the tubular envelope (1), so as to reserve a chamber in the form of a sector of a ring (12), fed with lubricating fluid to form a sliding fluid film between the bolster (3) and the casing (1), characterized in that each holding bolster (2, 23) extends over an angular sector (12) of an extent a little less than 180° and is associated with a circuit for circulating the fluid from one end of the annular chamber (12) of the bolster (3) to the other, comprising at least one low-pressure fluid feed duct (14) and a fluid recovery duct (15) which respectively open out at the two respective upstream and downstream ends of the annular chamber (12) of the said bolster (3), in such a way that each bolster (3) constitutes a hydrodynamic bearing for holding the envelope ; and in that the high-pressure fluid feed circuit (10) of the thrust jack (5, 7) of each holding bolster (3) is completely independent of the circuits (14, 15) for circulating the fluid in the annular chamber (12).

2. Milling roll according to Claim 1, characterized in that the lower part of the support (2) is machined to form at least one piston (5) which constitutes the fixed element of the hydraulic jack and which engages into a cylindrical receptacle (7) machined in the holding bolster (3) and forming the movable cylinder of the jack.

3. Milling roll according to Claim 2, characterized in that machined in each of the holding elements (23) are at least two cylindrical receptacles (27, 28) which have dimensions and positions corresponding to the dimension and position of at least two cylindrical pistons (25, 26) provided on the fixed support (22) opposite each of the holding elements (23).

4. Milling roll according to Claim 1, characterized in that the fixed element of each hydraulic jack consists of a cylindrical receptacle machined in the lower part of the fixed support (2) and forming the cylinder of the jack, in which engages a cylindrical piston machined on the holding bolster (3) and constituting the movable element of the jack.

5. Milling roll according to one of the preceding claims, characterized in that the form of each holding element (3) is determined so as to make it easier to generate the film of oil.

6. Milling roll according to any one of Claims 1 to 5, characterized in that it possesses ducts (17, 18, 19) for the inlet of high-pressure fluid into the zone (12) in the form of a sector of a ring, to prevent any possibility that the tubular envelope (1, 21) and the holding elements (3, 23) will accidentally come into contact with one another.

**Patentansprüche**

1. Walze für ein Walzwerk mit deformierbarem Mantel, gebildet von einem festen Joch (2), einem das Joch mit einem gewissen Radialspiel umschließenden rohrförmigen Mantel (1) und einer Mehrzahl von Elementen (3) zum Halten des rohrförmigen Mantels (1) in Radialrichtung, nebeneinander angeordnet auf der Länge des Jochs (2) und jeweils verbunden mit mindestens einem hydraulischen Arbeitszylinder zum Halten und Anpressen des Halteelements (3), umfassend zwei ineinander in Radialrichtung gleitbewegliche Elemente (5, 7), nämlich ein festes Element (5), ausgearbeitet aus der unteren Partie des festen Jochs (2), zugekehrt dem Halteelement (3), und ein aus dem Halteelement (3) ausgearbeitetes bewegliches Element (7), welche festen (5) und beweglichen (7) Elemente eine Zylinderkammer (9) begrenzen, die mit einem Hochdruckfluid-Speisekreis verbunden ist, wobei jedes Halteelement (3) einen Schuh in Form eines Zylinderabschnitts mit einer Außenseite geringfügig kleineren Durchmessers als der Durchmesser der Innenseite des rohrförmigen Mantels (1) bildet derart, daß eine Kammer in Form eines Ringsektors (12) freibleibt, gespeist mit Schmierfluid zur Bildung eines Fluidgleitfilms zwischen dem Schuh (3) und dem Mantel (1), dadurch gekennzeichnet, daß jeder Halteschuh (3, 23) sich über einen Ringsektor (12) einer Amplitude wenig unter 180° erstreckt und einem Fluidumlaufkreis von einem zum andern Ende der Ringkammer (12) zugeordnet ist, umfassend mindestens eine Kanal (14) zum Einspeisen eines Fluids niedrigen Drucks und einen Fluidablaufkanal, welche jeweils an den beiden Enden, stromaufwärts bzw. stromabwärts, der Ringkammer (12) des Schuhs (3) derart münden, daß jeder Schuh (3) ein hydrodynamisches Haltelager des Mantels bildet und daß der Hochdruckfluidspeisekreis (10) des Druck-Arbeitszylinders (5, 7) jedes Halteschuhs (3) vollständig unabhängig ist von dem Fluidumlaufkreis (14, 15) der Ringkammer (12).

2. Walze für ein Walzwerk nach Anspruch 1, dadurch gekennzeichnet, daß die untere Partie des Jochs (2) bearbeitet ist zur Bildung mindestens eines Kolbens (5), der das feste Element des Hydraulik-Arbeitszylinders bildet und in eine zylindrische Ausnehmung (7) greift, die in den Halteschuh (3) eingearbeitet ist und den beweglichen Zylinder des Arbeitszylinders bildet.

3. Walze für ein Walzwerk nach Anspruch 2, dadurch gekennzeichnet, daß in jedes Halteelement (23) mindestens zwei zylindrische Ausnehmungen (27, 28) eingearbeitet sind mit Abmessungen und Positionen entsprechend der Abmessung und der Position mindestens zweier zylindrischer Kolben (25, 26), vorgesehen auf dem festen Joch (22) gegenüber jedem der Halteelemente (23).

4. Walze für ein Walzwerk nach Anspruch 1, dadurch gekennzeichnet, daß das feste Element jedes hydraulischen Arbeitszylinders von einer zylindrischen, in den unteren Teil des festen Jochs (2) und den Zylinder des Arbeitszylinders bildenden Ausnehmung gebildet ist, in die ein zylindrischer Kolben greift, der aus dem Halteschuh (3) herausgearbeitet ist und das bewegliche Element des Arbeitszylinders bildet.

5. Walze für ein Walzwerk nach einem der vorangehenden Ansprüche, dadurch gekennzeichnet, daß die Form jedes Halteelements (3) derart festgelegt ist, daß die Bildung des Ölfilms erleichtert wird.

6. Walze für ein Walzwerk nach einem der Ansprüche 1 bis 5, dadurch gekennzeichnet, daß sie Hochdruckfluidzuleitungen (17, 18, 19) in die ringsektorförmige Zone (12) umfaßt zum Verhindern jeder Möglichkeit eines zufälligen Kontakt des rohrförmigen Mantels (1, 21) und der Halteelemente (3, 23).

Fig 1

Fig 2

7a 7b 7c

Fig 3

3a 3b 3c

23a 23b 23c 23d 23e 23F

27a 27f

Fig 5

28a 28f

23a

21 22

25 30 Fig 4

26

27 28

29 23